Europäisches Patentamt

European Patent Office

Office européen des brevets

(19)

(11) Publication number: **0 065 495**
**B1**

(12) **EUROPEAN PATENT SPECIFICATION**

(45) Date of publication of patent specification: **21.11.85**

(51) Int. Cl.⁴: **C 05 F 9/02**

(21) Application number: **82830090.5**

(22) Date of filing: **13.04.82**

(54) **Procedure for the forced maturing of the organic substances in compost.**

(30) Priority: **19.05.81 IT 8338481**

(43) Date of publication of application:
**24.11.82 Bulletin 82/47**

(45) Publication of the grant of the patent:
**21.11.85 Bulletin 85/47**

(84) Designated Contracting States:
**AT BE CH DE FR GB LI LU NL SE**

(56) References cited:
**AT-A- 319 287**
**AT-A- 358 606**
**DE-A-2 137 437**
**DE-A-2 451 284**
**DE-A-2 520 640**
**DE-A-2 558 255**
**FR-A-2 323 660**

(73) Proprietor: **DANECO-DANIELI ECOLOGIA Spa**
**Via Nazionale, 85 S.S. 56**
**I-33048 San Giovanni al Natisone (UD) (IT)**

(72) Inventor: **Babos, Luciano**
**Via Doberdò, 26**
**I-34100 Trieste (IT)**
Inventor: **Martegani, Antonio Dario**
**Via Ovidio, 4/3**
**I-34100 Trieste (IT)**
Inventor: **Lorenzutti, Franco**
**Via Manzoni, 8**
**I-33052 Cervignano del Friuli (UD) (IT)**

(74) Representative: **Petraz, Gilberto Luigi**
**G.L.P. S.a.s. di Gilberto Petraz P.le Cavedalis 6/2**
**I-33100 Udine (IT)**

Courier Press, Leamington Spa, England.

## Description

The subject of this invention is a procedure for the forced maturing of the organic substances in compost.

To be more exact, the subject of this invention is a procedure for the forced maturing of the organic substances in compost by blowing and aspirating air within heaps of any type disposed in a suitably equipped area.

A further subject of the invention is a plant which employs the procedure.

The compost also which is obtained with the procedure is a subject of the invention.

There exist various trials and systems for accelerating the process of composting the organic fraction in wastes and sludges by aspirating or blowing air within the fermenting material.

Various procedures and equipment for the forced maturing of the organic substances in compost are known in the prior art.

For example, patent AT—A—319.287 has a fully closed area with a forced circulation of air. This patent envisages pipes below various heaps of material with the relative shut-off means.

This patent discloses a single blower which is connected through a manifold to a system of conduits terminating under compost heaps.

According to different embodiments of the invention, the manifold can be connected to the outlet side or to the inlet side of the blower, so that the air can flow through the heaps upwards or downwards respectively.

It is not disclosed nor suggested that the connection between the blower and the manifold could be embodied in such a way that the equipment can be switched from a blowing mode to an aspirating mode or vice versa just by the actuation of valves.

In the case of buried pipes it is not possible to have access to the pipes, whereas if the pipes are in an accessible duct, there is the drawback of high costs for foundations and masonry.

The solution proposed in this patent is complex and expensive owing to the presence of coverings and masonry and a considerable length of pipelines.

Moreover, this solution requires several machines producing a flow of air together with the relative auxiliary means such as motors, controls, etc.

Patent DE—A—2.451.284 describes a procedure and equipment for maturing compost within fully closed containers with a double ventilated bottom.

This patent also envisages a sprinkler plant together with complicated means for controlling gases. Moreover, a movement of the compost is performed with a bridge crane or like means.

This needs fixed structures which are very burdensome and require maintenance. In any event the whole system is extremely complex.

The use of only one machine producing a flow of air, which can be switched as desired to exert a blowing or an aspirating action, is visualized.

Patent DE—A—2.520.240 envisages two manifolds, at the end of which are two separate machines producing a flow of air.

The plant is therefore more complex and expensive than that with one single line performing aspiration and blowing.

The procedure described envisages that, of two neighbouring channels, one introduces air while the other aspirates it, the two neighbouring channels being connected to two different manifolds of which one is blowing out air while the other is aspirating air.

Patents FR—A—2.323.660 and DE—A—2.558.255, both of them in the name of KNEER, teach a complex system of maturing in a closed space, the system being especially intended for the control of gases and fermentation temperatures. These systems are more suitable for laboratory use than for industrial applications.

Patent AT—A—358.636 teaches a system for maturing compost in an equipped area with a particularly numerous plurality of aeration branch lines and relative shut-off means, two separate main supply lines and relative machines and a plenum vessel. The proposed plant entails high losses of load and considerable constructional and operating costs.

The procedure of our invention enables some unusual characteristics to be obtained such as: — the obtaining of blowing and aspirating phases with only one machine producing a stream of air, whether the machine be a fan or blower or ventilating unit, the machine being linked to a special system of pipes: the system of valves of the unit and the control system, which is, for instance, of an electropneumatic type or the like, enable the flow to be inverted as desired without inverting the direction of rotation of the machine producing the air stream: the timing system permits the duration of the blowing and aspirating phases to be regulated independently: the regulating system enables the flow of air blown and aspirated to be suited to the time or to any one of the process parameters such as the temperature, free oxygen, carbon dioxide, pH, moisture, etc. for example, or to one or more combinations thereof.

The procedure of the invention makes many advantages available. The first advantage is the ability to minimize the composting time by supplying to the fermenting material the amount of air needed at each stage in the maturing process.

Another advantage is the ability to control the distribution of moisture in the material in the various zones of the heaps, thereby avoiding a build-up of moisture in the zones near the pipes aspirating and emitting air and in zones near the surface of the heaps.

Yet another advantage is the ability to avoid excessive dispersion of the heat generated by the process with continuous blowing of air and at the same time to obviate the formation of preferential paths for the air in the material.

A further advantage is the ability to supply continuously the oxygen needed by the microflora by permitting the oxygen to flow normally and thereby minimizing the fermentation time. Indeed, in contrast to systems using only blowing or only aspirating, the invention eliminates the need for stoppages, which are harmful to an even and uniform development of the microflora. Another advantage still is the ability to supply the exact amount of air, and therefore of oxygen, needed in the various maturing phases so as to have the correct amount of free oxygen within the heaps of fermenting material.

It is also an advantage to be able to control the temperature of the fermenting material, thereby avoiding levels of temperature harmful to the regular development of the process.

It is a further advantage to be able to minimize the energy required for the whole process; the procedure of the invention is carried out with a system for aspirating and blowing air, the system being embodied with one single group or machine producing the stream of air, whereby the machine is connected to a plurality of pipes or ducts which convey the air and whereby the pipes are governed by appropriate valves.

According to the invention the pipe is connected to a distribution system cooperating with a heap located in a suitably equipped area and the distribution system is connected to a manifold cooperating with a possible condensate trap.

From this condensate trap a pipe extends which divides into two branches and is thus connected both to the aspirating intake and to the delivery outlet of the machine producing the stream of air; after dividing into two branches the pipe is sectionalized by suitable valves.

Additional auxiliary pipes can be envisaged for making possible the discharge of aspirated air either into heap of mature compost or into the atmosphere, or else possibly for aspirating air from the environment or from the heap itself.

The invention is therefore obtained with a procedure for the forced maturing of the organic substances in compost whereby the maturing is brought about by blowing and aspirating air within heaps of any kind disposed in a suitably equipped area, and whereby one single machine producing a stream of air and always working in one single direction is connected to suitably joined pipes both at its inlet side and at its outlet side and serves to blow and to aspirate air, and whereby operating variations in respect of the maturing compost are governed by the actuation of valves.

It is also within the scope of the invention to envisage a plant for the forced maturing of the organic substances in compost by means of the blowing and aspirating of air within heaps of any kind disposed in a suitably equipped area, said plant performing the aforesaid procedure and including a manifold cooperating with a possible condensate trap, whereby a plurality of pipes cooperating with the aspirating intake and with the delivery outlet lies between the possible condensate trap and the unit producing the stream of air, and whereby the pipes are sectionalized by means of shut-off valves, and whereby there are pipes for aspirating from and/or for discharging into the atmosphere or for discharging into a heap of mature compost.

Let us now look at an embodiment of the invention with the help of the attached tables, which are provided as non-restrictive examples.

The tables give the following:—

Fig. 1 shows a diagram of a lengthwise vertical section of a plant of the invention;

Fig. 2 gives a diagram of a plant of the invention as seen from above;

Figs. 3 and 4 respectively show two solutions of the working of the invention.

The plant which employs the procedure of the invention for the forced maturing of the organic substances in compost is positioned in a suitably equipped area where there is a heap 10 of the organic substances being converted into compost by forced maturing. The organic substances are arranged in heaps 10 disposed in various and preferential ways.

Air is blown or aspirated within the heaps 10 through a plurality of perforated pipes or equivalent systems 12 lying in a position 11 substantially below the heap 10 itself. This plurality of perforated pipes 12 is connected to one or more manifolds 13.

To the manifold 13 is connected a pipe 22—122 which conveys the blown or aspirated air through a possible condensate trap 14, which may perhaps function automatically.

The aspiration or blowing of air through the pipe 22—122 is governed by the action carried out by a unit 15 producing a stream of air.

The unit 15 producing the stream of air can be a fan or a blower or else can be any desired ventilating unit.

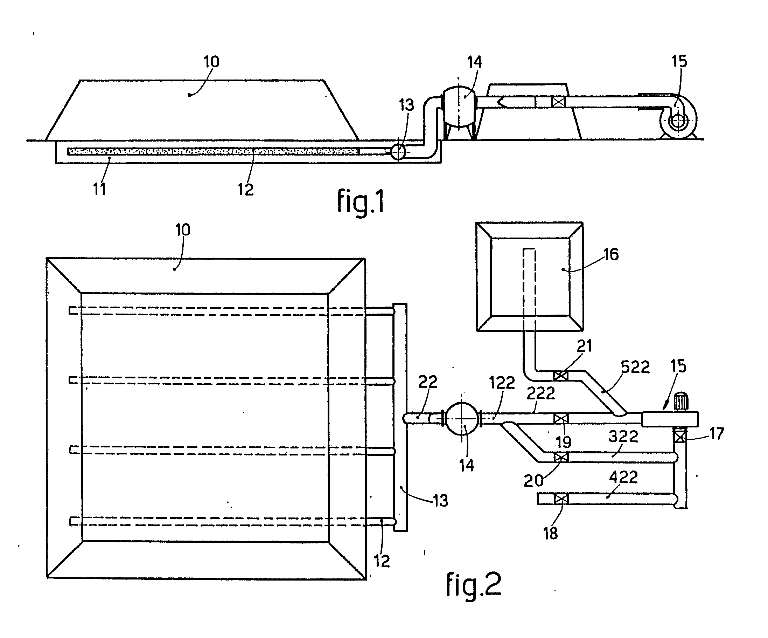

This unit 15 producing the stream of air is connected to a complex of pipes 222—322—422—522 which cooperate with the aspirating intake and the delivery outlet of the unit, as is shown clearly in Figs. 2, 3 and 4.

Shut-off valves 18—19—20—21 respectively cooperate with the pipes or ducts 22 and serve to close and sectionalize or to connect the various pipes 22 as desired.

The valves 18—19—20—21 can be actuated by an electropneumatic or electrical or hydraulic system or by any other system suitable for the purpose.

The unit 15 producing the stream of air is driven advantageously by an electric motor or by any other suitable motor, and the flow of air is regulated advantageously by a valve 17 positioned in the aspirating intake.

The individual aspirating or blowing phases are obtained by acting on the respective shut-off valves 18—19—20—21.

In particular, whenever the valves 18 and 19 are open and the valves 20 and 21 are closed, the unit 15 producing the stream of air aspirates air from the surroundings through the pipe 422 and sends it to the heaps 10 through the pipe 222 and the common pipe 22.

Instead, when the valves 18 and 19 are closed and the valves 20 and 21 are open, air is aspirated from the heaps 10 through the pipe 22 and the pipe 322.

Fluid aspirated by the unit 15 producing the flow of air is discharged into the atmosphere perhaps by making it pass into a compost filter 16 through the pipe 222 governed by the valve 21.

Actuation of the valves is carried out advantageously by means of electropneumatic or electrical apparatus or the like with which it is possible to regulate independently the duration of the individual phases of momentary actuation or disactuation, thus obtaining blowing and aspirating cycles of any suitable type and arrangement. The duration of opening or closure or partial opening or partial closure of the valves can be regulated to suit the parameters of the process to mature the compost and can be adjusted by means of suitable probes cooperating with the heap 10. Furthermore, the valve 17 can form an integral part of the machine 15 producing the stream of air and can be conformed substantially, for instance, as a pre-distributor means with radial vanes having a variable pitch setting.

The valve 17 enables the gases aspirated to be regulated to suit the characteristic parameters of the process. In this way it is possible to obtain a complex procedure perfectly tailored to suit the specific requirements of the heap 10 of maturing compost at the time in question.

In fact, the valves 18—19—20—21 can be partially closed or fully closed or open according to the momentary needs of the maturing heap 10.

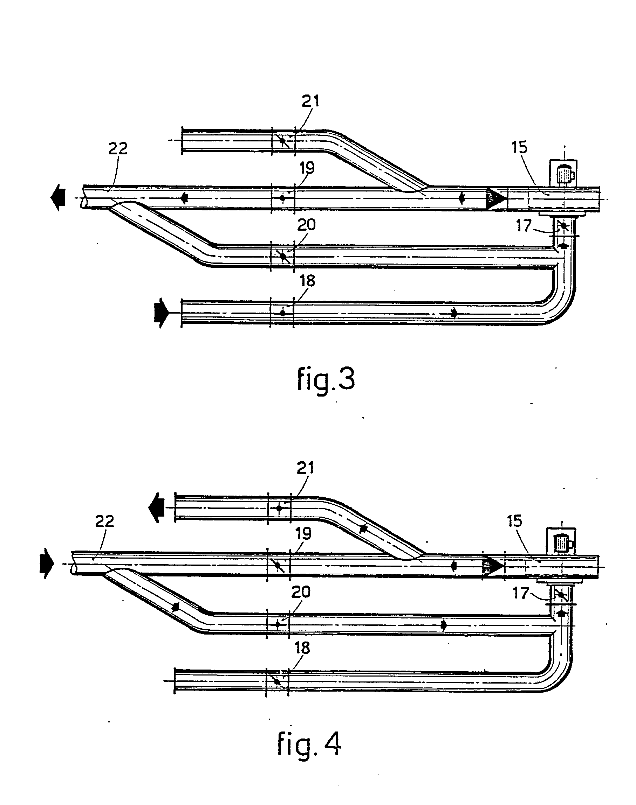

Figs. 3 and 4 show clearly two examples of aspiration and blowing respectively which can be obtained with the invention.

We have described here a preferred embodiment of the invention but variants are possible.

Thus it is possible to envisage auxiliary pipes and supplementary shut-off valves; it is also possible to visualise filters located upstream from the unit 15 producing the stream of air; moreover, it is possible to envisage that the pipe 522 is cut so as to permit discharge into the atmosphere; furthermore, it is possible to visualize the pipe 422 cooperating with the heap 10 of mature compost by aspirating air through the heap; it is possible to employ any type of machine producing a stream of air, and so on.

These and other variants are all possible for a person skilled in this field without departing thereby from the scope of the claims.

## Claims

1. Procedure for the forced maturing of organic substances in compost, by which the maturing is obtained by blowing and aspirating air within heaps (10) of any type arranged in a suitably equipped area, the procedure being characterized by the use of one single machine (15) producing a stream of air and always working in one single direction, which machine is connected to suitably joined pipes (22) both at its inlet side and at its outlet side and serves to blow and to aspirate air, the operating variations in relation to the maturing compost (10) being governed by the actuation of valves (17—18—19—20—21).

2. Procedure for the forced maturing of organic substances in compost as claimed in Claim 1, by which the aspiration is selected so as to take place through at least one pipe (322) drawing air from the maturing compost (10).

3. Procedure for the forced maturing of organic substances in compost as claimed in Claim 1 or 2, by which the blowing of air takes place either through at least one pipe (222) feeding delivery pipes (12) cooperating with the maturing compost (10) or through at least one pipe (122) discharging into a compost filter (16) or into the atmosphere.

4. Equipment for the forced maturing of organic substances in compost by blowing and aspirating air within heaps (10) of any type arranged in a suitably equipped area, which equipment performs the precedure of Claims 1, 2 and 3 and includes a manifold (13) cooperating with a possible condensate trap (114) and in which there is comprised between such possible condensate (14) and the unit (15) producing the stream of air a plurality of pipes (22) of which a part cooperates with the aspiration intake or with the delivery outlet, such pipes (22) being sectionalized by means of shut-off valves (18—19—20—21), pipes being included at least for aspirating (422) from and/or discharging (522) into the atmosphere or at least for aspirating (322) from and/or discharging (222) into such heap (10).

5. Equipment for the forced maturing of organic substances in compost as claimed in Claim 6, which comprises at least one connecting pipe (322) between the aspiration intake of the unit (15) producing the stream of air and a connecting pipe (122) or manifold (13).

6. Equipment for the forced maturing of the organic substances in compost as claimed in Claim 4 or 5, in which the pipe leaving the delivery outlet of the unit (15) producing the stream of air comprises at least one separation into two branches (222—522).

7. Equipment for the forced maturing of organic substances in compost as claimed in any of Claims 4 to 6 inclusive, in which each pipe (222—322—422—522) has its own shut-off valve (18—19—20—21) which is advantageously of a remote-controlled type.

8. Equipment for the forced maturing of organic substances in compost as claimed in any of Claims 4 to 7 inclusive, in which the actuation of the shut-off valves (18—19—20—21) is governed by sensors cooperating with the maturing compost (10).

## Patentansprüche

1. Verfahren zum forcierten Reifen von organischen Stoffen in Kompost, bei dem das Reifen durch Einblasen und Ansaugen von Luft in Massen (10) jeglichen Typs erzielt wird, die auf einer entsprechend ausgestatteten Fläche angeordnet sind, wobei das Verfahren durch die Benutzung einer einzigen Maschine (15) gekennzeichnet ist, die einen Luftstrom erzeugt und immer in einer einzigen Richtung arbeitet und die mit Röhren (22) verbunden ist, die sowohl an ihrer Ansaugseite als auch an ihrer Druckseite entsprechend verbunden sind, und die zum Einblasen und zum Ansaugen von Luft dient, wobei die Wirkungsänderungen hinsichtlich des reifenden Komposts (10) durch die Betätigung von Ventilen (17—18—19—20—21) gesteuert werden.

2. Verfahren zum forcierten Reifen von organischen Stoffen in Kompost nach Anspruch 1, bei dem die Ansaugung so gewählt wird, daß sie durch eine Röhre (322) stattfindet, die vom reifenden Kompost (10) Luft entzieht.

3. Verfahren zum forcierten Reifen von organischen Stoffen in Kompost nach Anspruch 1 oder 2, bei dem das Einblasen von Luft sowohl durch mindestens eine Röhre (222) stattfindet, die Verteilungsröhre (12) speist, die mit dem reifenden Kompost (10) mitwirken, als auch durch mindestens eine Röhre (122), die in einen Kompostfilter (16) oder in die Atmosphäre ausströmt.

4. Vorrichtung zum forcierten Reifen von organischen Stoffen in Kompost durch Einblasen und Ansaugen von Luft in Massen (10) jeglichen Typs, die auf einer entsprechend ausgestatteten Fläche angeordnet sind, wobei diese Vorrichtung das Verfahren der Ansprüche 1, 2 und 3 durchführt, und einen Sammelkanal (13) enthält, der mit einer etwaigen Kondenswasserfalle (14) mitwirkt und wo zwischen dieser etwaigen Kondenswasserfalle (14) und der Einheit (15), die den Luftstrom erzeugt, eine Mehrzahl Röhren (22) enthalten ist, von denen ein Teil mit dem Ansaugeingang oder mit der Druckmündung mitwirkt, wobei die genannten Röhren (22) durch Abfangventile (18—19—20—21) getrennt sind, und Röhre mindestens zum Ansaugen (422) von und/oder zum Ausströmen (522) in die Atmosphäre oder mindestens zum Ansaugen (322) von und/oder Ausströmen (222) in solche Masse (10) enthalten sind.

5. Vorrichtung zum forcierten Reifen der Stoffe in Kompost nach Anspruch 6, die mindestens eine Verbindungsröhre (322) zwischen dem Ansaugeingang der Einheit (15), die den Luftstrom erzeugt, und einer Verbindungsröhre (122) oder einem Sammelkanal (13) enthält.

6. Vorrichtung zum forcierten Reifen der organischen Stoffe in Kompost nach Anspruch 4 oder 5, bei der die Röhre, die die Druckmündung der den Luftstrom erzeugenden Einheit (15) verläßt, mindestens eine Trennung in zwei Abzweigungen (222—522) enthält.

7. Vorrichtung zum forcierten Reifen von organischen Stoffen in Kompost nach irgendeinem der Ansprüche 4 bis 6 eingeschlossen, bei der jede Röhre (222—322—422—522) ihr eigenes Abfangventil (18—19—20—21) hat, das vorteilhaft des ferngesteuerten Typs ist.

8. Vorrichtung zum forcierten Reifen von organischen Stoffen in Kompost nach irgendeinem der Ansprüche 4 bis 7 eingeschlossen, bei der die Betätigung der Abfangventile (18—19—20—21) von Sensoren gesteuert ist, die mit dem reifenden Kompost (10) mitwirken.

## Revendications

1. Procédé de maturation forcée de substances organiques à transformer en compost dans lequel la maturation est obtenue par insufflation et aspiration d'air dans des tas (10) de type quelconque disposés dans une zone convenablement équipée, le procédé étant caractérisé par l'utilisation d'une unique machine génératrice de flux d'air (15) et qui travaille toujours dans le même sens, laquelle machine est reliée à des tubes convenablement raccordés (22) à son côté d'entrée et à son côté de sortie et sert à insuffler et à aspirer de l'air, les variations de travail en fonction de la maturation du compost (10) étant commandées par l'actionnement de vannes (17—18—19—20—21).

2. Procédé pour la maturation forcée de substances organiques à transformer en compost selon la revendication 1, caractérisé en ce que l'aspiration est choisie de manière à se produire à travers au moins un tube (322) qui aspire de l'air pris dans le compost en cours de maturation (10).

3. Procédé de maturation forcée de substances organiques à transformer en compost selon l'une des revendications 1 et 2, caractérisé en ce que l'insufflation d'air se produit, soit à travers un tube (222) alimentant des tubes débiteurs (12) qui coopèrent avec le compost en cours de maturation (10), soit à travers au moins un tube (122) qui débite dans un filtre en compost (16) ou dans l'atmosphère.

4. Equipement pour la maturation forcée de substances organiques à transformer en compost opérant par insufflation et aspiration d'air dans des tas (10) de type quelconque disposés dans une zone convenablement équipée, mettant en oeuvre le procédé selon l'une des revendications 1, 2 et 3, caracterisé en ce que qu'il comprend un collecteur (13) qui coopère avec un éventual piège à condensat (14) et dans lequel est prévu, entre cet éventuel piège à condensat (14) et l'unité génératrice de flux d'air (15), une pluralité de tubes (22) dont certains coopèrent avec l'entrée d'aspiration ou avec la sortie de refoulement, ces tubes (22) étant divisés en tronçons au moyen de vannes d'arrêt (18—19—20—21) des tubes étant utilisés au moins pour aspirer (422) en provenance de l'atmosphère et/ou pour débiter (522) dans l'atmosphère ou du moins pour aspirer (322) en provenance de tas (10) et/ou pour (222) dans ledit tas.

5. Equipement pour la maturation forcée de substances organiques à transformer un compost, selon la revendication 4, caractérisé en ce qu'il comprend au moins un tube de liaison (322) placé entrée d'aspiration de l'unité génératrice de flux d'air (15) et un tube de liaison (122) ou un collecteur (13).

6. Equipement pour la maturation forcée de substances organiques à transformer en compost selon la revendication 4 ou 5, caractérisé en ce que tube qui quitte la sortie de refoulement de l'unité génératrice de flux d'air (15) comprend au moins une division en deux branches (222, 522).

7. Equipement pour la maturation forcée de substances organiques à transformer en compost selon l'une quelconque des revendications 4 à 6 incluse, caractérisé en ce que chaque tube (222—322—422—522) possède sa propre vanne d'arrêt (18—19—20—21) qui est avantageusement d'un type commandé à distance.

8. Equipement pour la maturation forcée de substances organiques à transformer en compost selon l'une quelconque des revendications 4 à 7 incluse, dans lequel l'actionnement des vannes d'arrêt (18—19—20—21) est commandé par des capteurs coopérant avec le compost (10) en cours de maturation.

fig.1

fig.2

0 065 495

fig.3

fig. 4